(19) Europäisches Patentamt / European Patent Office / Office européen des brevets

(11) EP 2 997 690 B1

(12) **FASCICULE DE BREVET EUROPEEN**

(45) Date de publication et mention
de la délivrance du brevet:
**15.02.2017 Bulletin 2017/07**

(21) Numéro de dépôt: **14725106.0**

(22) Date de dépôt: **15.05.2014**

(51) Int Cl.:
*H04L 5/00* ^(2006.01)     *H04L 27/30* ^(2006.01)

(86) Numéro de dépôt international:
**PCT/EP2014/059931**

(87) Numéro de publication internationale:
**WO 2014/184285 (20.11.2014 Gazette 2014/47)**

(54) **PROCÉDÉ DE CODAGE DE DONNÉES DANS UN SIGNAL OFDM**

VERFAHREN ZUR CODIERUNG VON DATEN IN EINEM OFDM-SIGNAL

METHOD FOR ENCODING DATA IN AN OFDM SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.05.2013 FR 1354352**

(43) Date de publication de la demande:
**23.03.2016 Bulletin 2016/12**

(73) Titulaire: **Safran Electronics & Defense
92100 Boulogne-Billancourt (FR)**

(72) Inventeur: **CHIODINI, Alain
F-92100 Boulogne-Billancourt (FR)**

(74) Mandataire: **Regimbeau
20, rue de Chazelles
75847 Paris Cedex 17 (FR)**

(56) Documents cités:
**WO-A1-2009/036217     US-A1- 2012 076 212**

**Description**

DOMAINE GENERAL

L'invention se rapporte au domaine des radiocommunications utilisant le codage de signaux numériques par répartition en fréquences orthogonales sous forme de multiples sous-porteuses (« Orthogonal Frequency-Division Multiplexing » en anglais, abrégé en OFDM).

ETAT DE L'ART

Un signal OFDM classique est composé d'une pluralité de sous-porteuses mutuellement orthogonales (afin de réduire autant que possible l'intervalle fréquentiel entre sous-porteuses consécutives dans le but d'accroître l'efficacité spectrale) portant au moins un bit d'information. L'ensemble de ces sous-porteuses est typiquement divisé en deux sous-ensembles :

- Un ensemble de M sous-porteuses utilisées pour l'estimation du canal de transmission (les phases portées par ces sous-porteuses sont connues par le récepteur),
- Un ensemble de N sous-porteuses utilisées pour le transport de données (les données sont modulées à l'aide d'un schéma de modulation classique : BPSK, QPSK, 16-QAM, 64-QAM, etc.).

La quantité d'information brute transportée par un tel signal OFDM dépend du schéma de modulation utilisé : cette quantité est de B x N bits par paquet si, d'une façon générale, un schéma de modulation portant B bits par sous-porteuse est utilisé.

L'augmentation du débit de transmission est un objectif continu dans le domaine des radiocommunications. Pour augmenter la quantité d'information transportée par un signal OFDM, une solution connue consiste naturellement à augmenter le nombre de sous-porteuses.

Cependant, une telle augmentation n'est pas toujours possible. Le nombre de sous-porteuses peut en effet être limité par le dispositif émetteur du signal OFDM, le canal de transmission lui-même et le dispositif de réception.

On connait par exemple le document WO 2009/036217, qui décrit un procédé pour transmettre des données via plusieurs sous-porteuses, et proposant de coder de l'information qui dépend des sous-porteuses utilisées et des sous-porteuses laissées inutilisées.

PRESENTATION DE L'INVENTION

Un but à atteindre est donc d'augmenter la quantité d'information transmise par un signal OFDM sans pour autant augmenter le nombre de sous-porteuses de ce signal OFDM.

Un autre but à atteindre est que l'information supplémentaire transmise ne soit pas affectée ni par les imperfections et/ou les distorsions engendrées par le canal de transmission.

Selon un mode de mise en oeuvre, il est un procédé de codage de données dans un signal OFDM destiné à être transmis dans un canal de communication et constitué à partir d'un ensemble prédéterminé de N fréquences mutuellement orthogonales, le signal OFDM comprenant une pluralité de sous-porteuses transportant des données modulées (MOD) selon un schéma de modulation prédéterminé, chaque sous-porteuse ayant une fréquence qui lui est propre et choisie dans l'ensemble prédéterminé de fréquences, le procédé comprenant les étapes de:

- sélection d'un sous-ensemble de N-P fréquences dans l'ensemble prédéterminé, à partir d'un symbole faisant partie d'un ensemble de symboles transmissibles, chacun symbole transmissible étant encodé par un sous-ensemble de fréquences qui lui est propre, et
- génération sélective de N-P sous-porteuses correspondant au sous-ensemble de N-P fréquences sélectionné,

caractérisé en ce que le nombre P étant choisi dans l'intervalle

$$\left[\!\!\left[ Pmax - \frac{N}{5}, Pmax + \frac{N}{5} \right]\!\!\right],$$

Pmax étant solution de l'équation

$$\Psi(N - P + 1) - \Psi(P + 1) = B \log_2 2,$$

où $\Psi$ est la fonction digamma, et B le nombre de bits par symbole modulé sur chaque sous-porteuse au moyen du schéma de modulation prédéterminé.

Parmi les N fréquences mises à disposition pour former le signal OFDM, seules N-P fréquences sont utilisées pour générer des sous-porteuses, les P autres fréquences étant laissées inutilisées.

De façon conventionnelle, des symboles sont transportées par les N-P sous-porteuses activées, selon le schéma de modulation prédéterminé.

Et de façon non-conventionnelle, la sélection particulière opérée de N-P fréquences parmi N encode en elle-même une information supplémentaire.

Avec un tel procédé, il est ainsi possible d'accroître la quantité d'information portée par un signal OFDM alors que des sous-porteuses parmi les sous-porteuses disponibles sont désactivées, constat qui va à l'encontre des connaissances générales de l'homme du métier.

Par ailleurs, le procédé tel que défini ci-dessus établit un intervalle particulier dans lequel choisir le nombre P de sous-porteuses à laisser désactivées, cet intervalle étant centré sur la valeur Pmax. La valeur Pmax maximise la quantité totale d'information transmise individuellement par chaque sous-porteuse activée (de façon conventionnelle), et aussi par la sélection particulière des N-P sous-porteuses activées, sélection qui encode en elle-même un symbole supplémentaire (de façon non-conventionnelle).

Ce choix d'intervalle permet donc d'augmenter la quantité totale d'information transmise de deux manières par le procédé, le nombre N de fréquences disponibles et le nombre B de bits par symboles du schéma de modulation étant tous deux prédéterminés.

Le signal OFDM poinçonné en fréquence émis a une efficacité spectrale accrue, surtout si le canal est peu ou prou affecté par le phénomène de multi-trajet (un canal considéré comme étant non sélectif en fréquence) et/ou caractérisé par un rapport signal sur bruit élevé: faisceaux hertziens terrestres entre relais de télévision, transmission entre avions, etc.

Un tel procédé est par ailleurs facile à mettre en oeuvre sur des codeurs existants.

Le procédé tel que proposé ci-dessus peut être complété par les caractéristiques suivantes, prises seules ou bien en combinaison lorsque cela est techniquement possible.

Le nombre P peut être choisi dans l'intervalle:

$$\left[\!\left[ Pmax - \frac{N}{10}, Pmax + \frac{N}{10} \right]\!\right].$$

Ceci permet d'augmenter la quantité totale d'information transmissible par chaque sous-porteuse activée, et par la sélection particulière des N-P sous-porteuses activées.

Le nombre P peut en outre être choisi dans l'intervalle:

$$\left[\!\left[ Pmax - \frac{N}{20}, Pmax + \frac{N}{20} \right]\!\right],$$

Ceci permet d'encore augmenter la quantité totale d'information transmissible par chaque sous-porteuse activée, et par la sélection particulière des N-P sous-porteuses activées.

Le nombre P peut en outre être choisi dans l'intervalle:

$$\left[\!\left[ Pmax - \frac{N}{40}, Pmax + \frac{N}{40} \right]\!\right],$$

Ceci permet d'augmenter encore davantage la quantité totale d'information transmissible par chaque sous-porteuse activée, et par la sélection particulière des N-P sous-porteuses activées.

Le canal de communication peut être non sélectif en fréquence pour au moins l'ensemble prédéterminé de fréquences mutuellement orthogonales, de façon à améliorer la détection des sous-porteuses poinçonnées à la réception.

Le schéma de modulation prédéterminé peut être BPSK, qui permet d'augmenter de façon significative la quantité d'information transmise dans le canal de communication.

Chaque symbole transmissible peut être un mot binaire de N bits, N étant le nombre de fréquences mutuellement orthogonales, chaque bit du mot binaire étant associé à une fréquence respective de l'ensemble prédéterminé de fréquences. Par ailleurs, chaque fréquence associée à une sous-porteuse générée peut encoder un « 1 », et chaque fréquence associée à une sous-porteuse non-générée encoder un « 0 ».

Tout symbole transmissible peut être déterminé par une transformation biunivoque opérée sur un entier à encoder, l'ensemble de départ de la transformation biunivoque étant un intervalle d'entiers et son ensemble d'arrivée étant un ensemble des symboles transmissibles de cardinal $C_N^P$, P étant le nombre de sous-porteuses non-générées au cours de l'étape de génération sélective.

Le nombre P de sous-porteuses non-générées au cours de l'étape de génération sélective peut être fixe ou variable.

P peut être choisi dans l'intervalle $\left[\!\left[ Pmax - \frac{N}{10}, Pmax + \frac{N}{10} \right]\!\right]$, Pmax étant solution de l'équation

$$\Psi(N - P + 1) - \Psi(P + 1) = B \log_2 2$$

où $\Psi$ est la fonction digamma, et B le nombre de bits par symbole modulé sur chaque sous-porteuse au moyen du schéma de modulation prédéterminé, de façon à maximiser la quantité supplémentaire d'information supplémentaire transmise dans le canal de communication.

Il est également proposé un codeur de données configuré pour mettre en oeuvre le procédé de codage décrit selon ce qui précède.

## DESCRIPTION DES FIGURES

D'autres caractéristiques, buts et avantages de l'invention ressortiront de la description qui suit, qui est purement illustrative et non limitative, et qui doit être lue en regard des figures annexées sur lesquelles:

- La figure 1 illustre les étapes d'un procédé de codage selon un mode de réalisation.

- La figure 2 détaille des sous-étapes d'une étape illustrée en figure 1.

- La figure 3 représente schématiquement un codeur selon un mode de réalisation.

- La figure 4 illustre les étapes d'un procédé de décodage selon un mode de réalisation.

- La figure 5 représente schématiquement un décodeur selon un mode de réalisation.

- La figure 6 représente l'accroissement de quantité d'information obtenu au moyen d'un procédé de codage selon l'invention, en fonction d'un nombre de sous-porteuses poinçonnées dans un signal OFDM pour plusieurs schémas de modulations.

## DESCRIPTION DETAILLEE DE L'INVENTION

*Principes de modulation dans des signaux OFDM*

La transmission mise en oeuvre utilise un ensemble de N fréquences orthogonales prédéterminées pour générer des sous-porteuses d'un signal OFDM à émettre sur un canal de communication.

Le canal de communication est de préférence gaussien, c'est-à-dire non sélectif en fréquence, ou quasi-gaussien, c'est-à-dire non sélectif en fréquence pour au moins l'ensemble des N fréquences prédéterminées.

Les sous-porteuses sont utilisées pour le transport de données en symboles à l'aide d'un schéma de modulation classique: BPSK, QPSK, 16-QAM, 64-QAM, etc. La quantité d'information brute transportée dépend donc du schéma de modulation utilisé:

- 1 x N bits par symbole si le schéma de modulation BPSK est utilisé (soit 1 bit par sous-porteuse) ;
- 2 x N bits par symbole si le schéma de modulation QPSK est utilisé (soit 2 bits par sous- porteuse) ;
- 4 x N bits par symbole si le schéma de modulation 16-QAM est utilisé (soit 4 bits par sous-porteuse) ;

- 6 x N bits par symbole si le schéma de modulation 64-QAM est utilisé (soit 6 bits par sous-porteuse) ;
- d'une façon générale, B x N bits par symbole si un schéma de modulation portant B bits par sous-porteuse est utilisé.

Chaque sous porteuse modulée occupe une bande spectrale s'étendant autour de la fréquence correspondante.

Par convention, on définit deux états de sous-porteuse.

Une sous-porteuse est dite active, activée ou utilisée, si sa bande spectrale est présente dans le spectre du signal OFDM émis.

Par opposition, une sous-porteuse est dite non-active, désactivée ou inutilisée, si sa bande spectrale n'est pas présente dans le signal OFDM émis. Aucune information n'est alors transportée par une telle sous-porteuse.

Dans la suite, une commutation de sous-porteuse désignera une activation ou une désactivation de la sous-porteuse, engendrant par conséquent un changement d'état pour la sous-porteuse.

*Modulation supplémentaire d'un mode de mise en oeuvre - Principes*

Soit $P \in [\![1, N-1]\!]$ un nombre prédéterminé de sous-porteuses à désactiver.

Par convention, on appelle « signal de référence » un signal OFDM comportant l'ensemble des N sous-porteuses disponibles activées, et on appelle signal OFDM « poinçonné en fréquence » un signal ne comportant que N-P sous-porteuses activées parmi les N sous-porteuses disponibles, les P sous-porteuses restantes étant laissées désactivées.

N et P étant déterminés, il existe $C_N^P$ manières d'activer sélectivement N-P sous-porteuses modulées selon un schéma de modulation prédéterminé parmi les N sous-porteuses disponibles pour émettre un signal OFDM poinçonné en fréquence sur le canal de communication. $C_N^P$ signaux poinçonnés peuvent par conséquent être émis alternativement, selon le choix des P sous-porteuses laissées désactivées. Le spectre de chacun des $C_N^P$ signaux poinçonnés comporte P « bulles spectrales » correspondant à l'absence des bandes spectrales des P sous-porteuses désactivées.

Une première quantité d'information est portée de façon conventionnelle par les N-P sous-porteuses activées du signal OFDM. Cette première quantité d'information contient B x (N-P) bits par paquet si un schéma de modulation portant B bits par sous-porteuse est utilisé.

Une deuxième quantité d'information est en outre portée, de façon non conventionnelle, par la répartition fréquentielle spécifique des bulles spectrales de chaque signal poinçonné.

Chaque signal poinçonné en fréquence peut donc encoder un mot dans un ensemble de $C_N^P$ mots disponibles, et émettre une succession de signaux poinçonnés différentes dans le temps revient donc à émettre une succession de mots.

Par exemple, si N=4 et P=2, 6 mots Y peuvent être transmis par un signal poinçonné en fréquence correspondant.

Dans un mode de réalisation, les P sous-porteuses désactivées encodent chacune un « 0 », et les N-P sous-porteuses activées encodent chacune un « 1 ».

Chaque mot qu'encode un signal poinçonné respectif est alors être un mot binaire constitué de N bits, dont P bits sont de valeur « 0 » et N-P bits sont de valeur « 1 ».

Par exemple, pour N=4, P=1, les 6 mots binaires suivants peuvent être transportés : 0011, 0101, 0110, 1001, 1010, 1100.

Dans un mode de réalisation, on cherche à transmettre selon cette méthode non conventionnelle n'importe que entier X issu d'un intervalle [0,$2^m$[ où $m \in \mathbb{N}^*$.

A cet effet, un algorithme permettant d'associer un mot binaire Y formé d'une combinaison de P bits « 0 » avec N-P bits « 1 » à un entier X donné peut être mis en oeuvre.

L'ensemble de départ de la transformation biunivoque est un intervalle d'entiers, chaque entier étant de longueur en bits inférieure ou égale à la partie entière de $\log_2 C_N^P$.

L'ensemble d'arrivée de la transformation biunivoque est l'ensemble des $C_N^P$ symboles supplémentaires.

Par exemple, les 6 mots binaires précités correspondant au cas pour N=4 et P=1 peuvent être les images respectives des entiers $[\![0,5]\!]$ par une transformation biunivoque appropriée.

La transformation biunivoque permet de ne pas être limité à l'encodage d'un ensemble de symboles de valeurs discontinues, mais de pouvoir notamment encoder des données ordonnées, par exemples des données pouvant être représentées par des entiers.

*Exemple de mise en oeuvre d'une telle modulation supplémentaire*

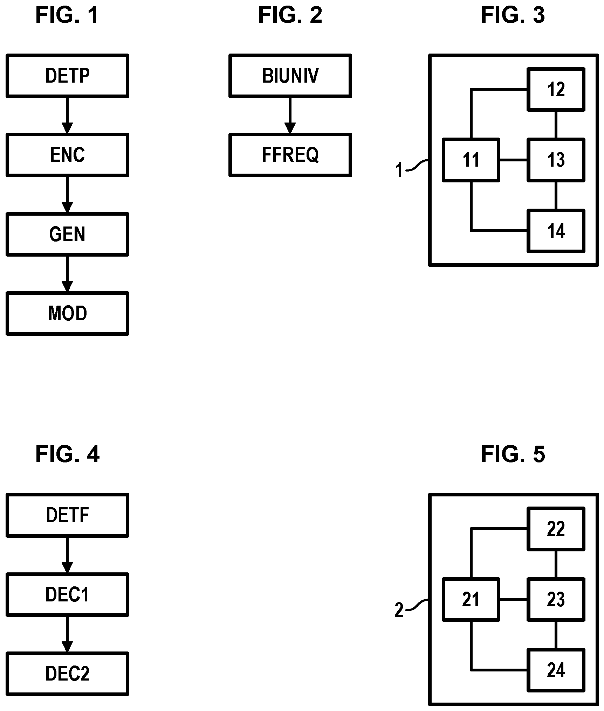

A l'émission, le procédé de codage met en oeuvre les étapes suivantes, par ailleurs illustrées en figures 1 et 2.

La valeur de l'entier P est prédéterminée à l'avance, par exemple de la façon qui est décrite plus loin de façon plus détaillée. En variante, P peut être déterminée dans une étape préliminaire DETP réalisée à chaque codage, en fonction de la quantité d'information supplémentaire à transmettre.

Dans une première étape ENC, un sous-ensemble de P fréquences à désactiver est déterminé à partir d'un symbole parmi $C_N^P$ symboles supplémentaires transmissibles.

Dans une deuxième étape GEN, on met en oeuvre les commutations nécessaires pour désactiver les P sous-porteuses correspondant aux P fréquences déterminées et activer les N-P autres sous-porteuses.

Dans une troisième étape MOD, les N-P sous-porteuses activées sont modulées selon un schéma de modulation prédéterminé, constituant ainsi un signal OFDM.

Les étapes GEN et MOD peuvent être réalisées simultanément pour générer le signal OFDM en réalisant une transformée de Fourier rapide inverse (IFFT) d'un tableau de coefficients complexes, chaque coefficient correspondant à un point de constellation respectif du schéma de modulation prédéterminé et encodant B bits, les coefficients associés aux P sous-porteuses à désactiver peuvent alors être mis à zéro avant de procéder au calcul de la transformée de Fourier inverse.

En variante, l'étape GEN peut générer un signal OFDM de référence puis opérer un filtrage des fréquences correspondant aux P sous-porteuses à désactiver.

Le signal OFDM obtenu est ensuite transmis dans le canal de communication.

Le procédé est répété pour chaque nouvel entier à transmettre sur le canal de communication.

Dans un mode de réalisation, on cherche à transmettre un entier X. L'étape d'encodage ENC peut alors comporter les sous-étapes suivantes :

- Une sous-étape BIUNIV mettant en oeuvre une transformation biunivoque laquelle détermine un mot binaire Y formé d'une combinaison de P bits 0 et N-P bits 1 à partir de l'entier X,
- Une sous-étape FFREQ déterminant P fréquences parmi les N disponibles correspondant aux poids des P bits du mot binaire dont la valeur est 0, les P sous-porteuses correspondantes étant destinées à être laissées désactivées au cours de l'étape GEN.

Un exemple de transformation biunivoque peut être réalisé par l'algorithme suivant, qui permet d'associer un mot binaire Y formé d'une combinaison de P bits « 0 » et de N-P bits « 1 » à un entier X donné.

Initialisations : i=1, j=0, Y = [1 1 ... 1]

Pour n allant de 1 à N :

    Si (P - i) ≥ 0 alors

        Calculer S = $C_{N-n}^{P-i}$

    Sinon

        S = 1

    Fin

    Si X < S alors

        Y(n) = 0

        i := i+1

        j := j+1

        Si j = P alors

            Quitter la boucle

        Fin

    Sinon

        X := X-S

    Fin

Fin

En référence à la figure 3, le procédé de codage décrit est mis en oeuvre par un codeur 1 comprenant un module de sélection 12, un module de génération 13 de sous-porteuses, et un module de modulation 14.

Le codeur 1 est préconfiguré avant sa mise en fonctionnement avec les paramètres suivants :

- un ensemble de N fréquences et mutuellement orthogonales,
- un nombre P inférieur à N,
- un schéma de modulation.

Par exemple, le codeur peut comprendre des moyens de stockage 11 dans lesquels ces paramètres sont mémorisés.

Le module de sélection 12 est configuré pour déterminer un sous-ensemble de N-P fréquences à activer parmi les N fréquences prédéterminées d'un symbole à transmettre. En variante le module de sélection 12 peut être adapté pour déterminer un sous-ensemble de P fréquences à désactiver parmi les N mémorisées.

Le module de génération 13 est configuré pour réaliser les commutations nécessaires à la génération sélective de N-P sous-porteuses à partir du sous-ensemble fréquences déterminé par le module de sélection 12.

Le module de modulation 14 est configuré pour moduler les sous-porteuses générées par le module de génération 13 selon le schéma de modulation prédéterminé à partir de données conventionnelles et émettre le signal OFDM obtenu dans un canal de communication.

A la réception, le procédé de décodage met en oeuvre les étapes suivantes, illustrées en figure 4.

Dans une première étape DETF, on détermine les fréquences de sous-porteuses activées dans un signal OFDM reçu depuis un canal de communication.

Cette détection peut comprendre la détermination d'une puissance de sous-porteuse pour chacune des N fréquences prédéterminées et la comparaison de chaque puissance de sous-porteuse avec un seuil de puissance moyen. Toute sous-porteuse de puissance supérieure au seuil est considérée activée, et les autres sous-porteuses sont considérées désactivées.

Dans une deuxième étape de décodage DEC1, un symbole est déterminé à partir du sous-ensemble de N-P fréquences activée. Cette étape peut mettre en oeuvre une transformation biunivoque inverse.

Un exemple de transformation biunivoque inverse est l'algorithme suivant, qui permet d'associer un entier X à un mot binaire Y formé d'une combinaison de P bits « 0 » et de N-P bits « 1 ».

Initialisations : i=1, j=0, X=0

Boucle :

Pour n allant de 1 à N:

$$\text{Si } (P - i) \geq 0 \text{ alors}$$
$$\text{Calculer } S = C_{N-n}^{P-i}$$
$$\text{Sinon}$$
$$S = 0$$
$$\text{Fin}$$
$$\text{Si } Y(n) = 1 \text{ alors}$$
$$X := X + S$$
$$\text{Sinon}$$
$$i := i+1$$
$$j := j+1$$
$$\text{Si } j = P \text{ alors}$$
$$\text{Quitter la boucle}$$
$$\text{Fin}$$
$$\text{Fin}$$
$$\text{Fin}$$

Dans une deuxième étape de décodage DEC2, des données modulées par chaque sous-porteuse activée dans le signal OFDM reçu selon un schéma de modulation sont décodées de façon conventionnelle. Cette deuxième étape peut être réalisée en parallèle de l'étape DEC1.

En référence à la figure 5, le procédé de décodage décrit est mis en oeuvre par un décodeur 2 comprenant un module de détection 22, un module de décodage primaire 23 et un module de décodage secondaire 24.

Le décodeur est préconfiguré avant sa mise en fonctionnement avec les paramètres suivants :

- un ensemble de N fréquences et mutuellement orthogonales;
- un nombre P inférieur à N,
- un schéma de modulation.

Par exemple, le décodeur peut comprendre des moyens de stockage 21 dans lesquels ces paramètres sont mémorisés.

Le module de détection 22 est configuré pour déterminer un sous-ensemble de fréquences de sous-porteuses activées dans un signal OFDM reçu depuis un canal de communication, parmi les N fréquences prédéterminées.

Le module de décodage primaire 23 est configuré pour déterminer un symbole transmis dans le signal OFDM à partir du sous-ensemble N-P de fréquences détecté par le module de détection 22.

Le module de décodage secondaire 24 est par ailleurs configuré pour décoder des données modulées de façon conventionnelle selon le schéma de modulation prédéterminé par chaque sous-porteuse détectée par le module de détection 22.

Comme dit précédemment, les procédés de codage/décodage sont de préférence destinés à un canal de communication gaussien ou quasi-gaussien. En effet, un canal sélectif en fréquence (c'est-à-dire un canal multi-trajet caractérisé par des retards relativement importants entre les signaux direct et réfléchis) génère des « entailles » ou « encoches » fréquentielles (évanouissements) plus ou moins larges et profonds dans le domaine sur le signal multi-porteuses, ces entailles ou encoches pouvant être confondues avec l'absence d'une ou plusieurs sous-porteuses.

Un canal gaussien, essentiellement « plat » en fréquence, permet donc d'améliorer la détection des sous-porteuses absentes.

*Prédétermination de P et résultats*

Le gain d'information en bits G(P) réalisé par un signal poinçonné en fréquence par rapport au signal OFDM de référence est le suivant:

$$G(P) = B(N - P) + \log_2 C_N^P - BN = \log_2 C_N^P - BP$$

Il existe une valeur optimale de P pour laquelle le gain G(P) est maximal. Cette valeur optimale Pmax est le résultat de l'équation suivante d'inconnue P :

$$\Psi(N - P + 1) - \Psi(P + 1) = B \log_2 2$$

où $\Psi$ est la fonction digamma.

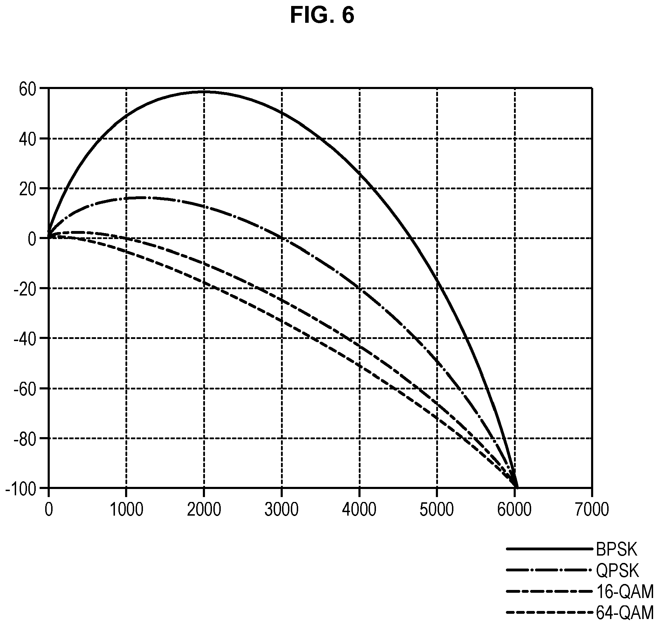

On a représenté en figure 6 le gain d'information en pourcentage dans un signal OFDM poinçonné par rapport à signal OFDM de référence en fonction de la variable P, N étant égal à 6048, pour quatre schémas de modulation différents (BPSK, QPSK, 16-QAM et 64-QAM).

Quel que soit le schéma de modulation utilisé, la courbe de gain correspondante est d'abord croissante et positive, atteint une valeur maximale puis décroît jusqu'à devenir négative, si le nombre P de sous-porteuses poinçonnées devient trop important.

Le tableau ci-dessous donne, à titre d'exemple, le gain réalisé lorsque N=6048 (cas pris dans le standard DVB-T) et pour différentes valeurs de P (le schéma de modulation utilisé est BPSK) :

| P | G(P) | |
|---|------|------|
|  | bits | % |
| 1 | 11,56 | 0,19 |
| 2 | 22,12 | 0,37 |
| 5 | 30,10 | 0,50 |
| 10 | 93,82 | 1,55 |
| 20 | 170,12 | 2,81 |
| 50 | 363,61 | 6,01 |
| 100 | 630,27 | 10,42 |
| 200 | 1062,27 | 17,56 |
| 500 | 1983,15 | 32,79 |
| 1000 | 2906,53 | 48,06 |
| 2000 | 3531,20 | 58,39 |
| 5000 | -980,09 | -16,21 |

La valeur Pmax de P maximisant le gain est P = 2016. Dans ce cas, G(2016) = 3531,33 bits soit un accroissement très avantageux de 58,39 %.

Pour le schéma de modulation QPSK, un accroissement égal à 16,04% peut être obtenu, pour une P = 1209.

Pour le schéma de modulation 16-QAM, un accroissement égal à 2,16% peut être obtenu, pour une P = 355.

Pour le schéma de modulation 64-QAM, un accroissement égal à 0,36% peut être obtenu, pour une P = 93.

De façon générale, on choisit le nombre P dans l'intervalle suivant:

$$\left[\!\left[ Pmax - \frac{N}{5}, Pmax + \frac{N}{5} \right]\!\right].$$

Préférentiellement, on choisit le nombre P dans l'intervalle suivant : $\left[\!\left[ Pmax - \frac{N}{10}, Pmax + \frac{N}{10} \right]\!\right].$

Très préférentiellement, le nombre P est choisi dans l'intervalle:

$$\left[\!\left[ Pmax - \frac{N}{20}, Pmax + \frac{N}{20} \right]\!\right], \text{ voire dans } \left[\!\left[ Pmax - \frac{N}{40}, Pmax + \frac{N}{40} \right]\!\right].$$

Dans les modes de réalisation décrits ci-dessus, le nombre P de sous-porteuses poinçonnées est choisi fixe et est connu de l'émetteur et du récepteur. Ainsi ce nombre P n'a pas à être communiqué au récepteur par voie de signalisation, ce qui permet de simplifier et rendre plus rapide la transmission des symboles supplémentaires entre un émetteur et un récepteur.

En variante, le nombre P peut être variable dans le temps. Ceci permet d'étendre le nombre de symboles transmissibles dans le canal de transmission selon la méthode non conventionnelle décrite. Par exemple, si P est choisi variable dans l'intervalle $[\![P0, P1]\!]$, où P0 et P1 sont chacun inférieurs à N, le nombre de symboles transmissible est égal à $\sum_{P=P0}^{P1} C_N^P$.

## Revendications

1. Procédé de codage de données dans un signal OFDM destiné à être transmis dans un canal de communication et constitué à partir d'un ensemble prédéterminé de N fréquences mutuellement orthogonales, le signal OFDM comprenant une pluralité de sous-porteuses transportant des données modulées (MOD) selon un schéma de modulation prédéterminé, chaque sous-porteuse ayant une fréquence qui lui est propre et choisie dans l'ensemble prédéterminé de fréquences, le procédé comprenant les étapes de:

   - sélection (ENC) d'un sous-ensemble de N-P fréquences dans l'ensemble prédéterminé, à partir d'un symbole faisant partie d'un ensemble de symboles transmissibles, chacun symbole transmissible étant encodé par un sous-ensemble de fréquences qui lui est propre, et
   - génération sélective (GEN) de N-P sous-porteuses correspondant au sous-ensemble de N-P fréquences sélectionné,

   **caractérisé en ce que** le nombre P étant choisi dans l'intervalle $\left[\!\left[ Pmax - \frac{N}{5}, Pmax + \frac{N}{5} \right]\!\right]$, Pmax étant solution de l'équation

   $$\Psi(N - P + 1) - \Psi(P + 1) = B \log_2 2,$$

   où $\Psi$ est la fonction digamma, et B le nombre de bits par symbole modulé sur chaque sous-porteuse au moyen du schéma de modulation prédéterminé.

2. Procédé de codage de données selon la revendication 1, dans lequel le nombre P est choisi dans l'intervalle $\left[\!\left[ Pmax - \frac{N}{10}, Pmax + \frac{N}{10} \right]\!\right].$

3. Procédé de codage de données selon la revendication 1, dans lequel le nombre P est choisi dans l'intervalle $\left[\!\left[ Pmax - \frac{N}{20}, Pmax + \frac{N}{20} \right]\!\right].$

4. Procédé de codage de données selon la revendication 1, dans lequel le nombre P est choisi dans l'intervalle

$$\left[\!\left[ Pmax - \frac{N}{40}, Pmax + \frac{N}{40} \right]\!\right].$$

5. Procédé de codage de données selon l'une des revendications 1 à 4, dans lequel le canal de communication est non sélectif en fréquence pour au moins l'ensemble prédéterminé de fréquences mutuellement orthogonales.

6. Procédé de codage de données selon l'une des revendications 1 à 5, dans lequel chaque symbole transmissible est un mot binaire de N bits, chaque bit du mot binaire étant associé à une fréquence respective de l'ensemble prédéterminé de fréquences.

7. Procédé de codage de données selon l'une des revendications 1 à 6, dans lequel chaque fréquence associée à une sous-porteuse générée encode un « 1 », et chaque fréquence associée à une sous-porteuse non-générée encode un « 0 ».

8. Procédé de codage de données selon l'une des revendications 1 à 7, dans lequel tout symbole transmissible est déterminé par une transformation biunivoque (BIUNIV) opérée sur un entier à encoder, l'ensemble de départ de la transformation biunivoque étant un intervalle d'entiers et son ensemble d'arrivée étant un ensemble des symboles transmissibles de cardinal $C_N^P$.

9. Procédé de codage de données selon l'une des revendications 1 à 8, dans lequel le nombre P est fixe.

10. Procédé de codage de données selon l'une des revendications 1 à 9, dans lequel le schéma de modulation prédéterminé est BPSK.

11. Codeur de données, **caractérisé en ce qu'**il est configuré pour mettre en oeuvre le procédé de codage selon l'une des revendications 1 à 10.

**Patentansprüche**

1. Verfahren zum Codieren von Daten in einem OFDM-Signal, das dazu bestimmt ist, in einem Kommunikationskanal übertragen zu werden und ausgehend von einer vorbestimmten Einheit von N Frequenzen, die zueinander senkrecht sind, gebildet zu werden, wobei das OFDM-Signal eine Vielzahl von Unterträgerwellen umfasst, die die modulierten Daten (MOD) gemäß einem vorbestimmten Modulationssystem transportieren, wobei jede Unterträgerwelle eine Frequenz hat, die ihr eigen ist, und die aus der vorbestimmten Einheit von Frequenzen ausgewählt ist, wobei das Verfahren folgende Schritte umfasst:

   - Auswahl (ENC) einer Untereinheit von N-P Frequenzen aus der vorbestimmten Einheit, ausgehend von einem Symbol, das zu der Einheit übertragbarer Symbole gehört, wobei jedes übertragbare Symbol von einer Untereinheit von Frequenzen, die ihm eigen ist, codiert ist, und
   - selektives Erzeugen (GEN) von N-P Unterträgerwellen, die der ausgewählten Untereinheit von N-P Frequenzen entsprechen,

   **dadurch gekennzeichnet, dass** die Anzahl P aus dem Intervall $\left[\!\left[ Pmax - \frac{N}{5}, Pmax + \frac{N}{5} \right]\!\right]$ ausgewählt ist, wobei Pmax die Lösung der Gleichung

   $$\Psi(N - P + 1) - \Psi(P + 1) = B \log_2 2!$$

   ist,
   wobei $\Psi$ die Digamma-Funktion ist und B die Anzahl von Bits pro Symbol ist, die auf jeder Unterträgerwelle mittels des vorbestimmten Modulationssystems moduliert ist.

**2.** Verfahren zum Codieren von Daten nach Anspruch 1, wobei die Anzahl P aus dem Intervall $\left[\!\left[Pmax - \frac{N}{10}, Pmax + \frac{N}{10}\right]\!\right]$ ausgewählt ist.

**3.** Verfahren zum Codieren von Daten nach Anspruch 1, wobei die Anzahl P aus dem Intervall $\left[\!\left[Pmax - \frac{N}{20}, Pmax + \frac{N}{20}\right]\!\right]$ ausgewählt ist.

**4.** Verfahren zum Codieren von Daten nach Anspruch 1, wobei die Anzahl P aus dem Intervall $\left[\!\left[Pmax - \frac{N}{40}, Pmax + \frac{N}{40}\right]\!\right]$ ausgewählt ist.

**5.** Verfahren zum Codieren von Daten nach einem der Ansprüche 1 bis 4, wobei der Kommunikationskanal hinsichtlich der Frequenz für mindestens die vorbestimmte Einheit zueinander senkrechter Frequenzen nicht selektiv ist.

**6.** Verfahren zum Codieren von Daten nach einem der Ansprüche 1 bis 5, wobei jedes übertragbare Symbol ein binäres Wort zu N Bits ist, wobei jedes Bit des binären Worts mit einer jeweiligen Frequenz der vorbestimmten Einheit von Frequenzen assoziiert ist.

**7.** Verfahren zum Codieren von Daten nach einem der Ansprüche 1 bis 6, wobei jede Frequenz, die mit einer erzeugten Unterträgerwelle assoziiert ist, eine "1" codiert, und jede Frequenz, die mit einer nicht erzeugten Unterträgerwelle assoziiert ist, eine "0" codiert.

**8.** Verfahren zum Codieren von Daten nach einem der Ansprüche 1 bis 7, wobei jedes übertragbare Symbol von einer eineindeutigen Transformation (BIUNIV) bestimmt wird, die auf einer zu codierenden Ganzzahl ausgeführt wird, wobei die Ausgangseinheit der eineindeutigen Transformation ein Bereich von Ganzzahlen ist, und seine Zieleinheit eine Einheit übertragbarer Symbole Kardinal $C_N^P$ ist.

**9.** Verfahren zum Codieren von Daten nach einem der Ansprüche 1 bis 8, wobei die Anzahl P gleich bleibt.

**10.** Verfahren zum Codieren von Daten nach einem der Ansprüche 1 bis 9, wobei das vorbestimmte Modulationssystem BPSK ist.

**11.** Datencoder, **dadurch gekennzeichnet, dass** er konfiguriert ist, um das Codierverfahren nach einem der Ansprüche 1 bis 10 umzusetzen.

**Claims**

**1.** A method to encode data in an OFDM signal intended to be transmitted over a communication channel and formed from a predetermined set of N mutually orthogonal frequencies, the OFDM signal comprising a plurality of sub-carriers carrying modulated data (MOD) according to a predetermined modulation scheme, each sub-carrier having its own particular frequency and selected from the predetermined set of frequencies, the method being **characterized in that** it comprises the steps of:

- selecting (ENC) a subset of N-P frequencies in the predetermined set from a symbol belonging to a set of transmissible symbols, each transmissible symbol being encoded by its own particular subset of frequencies, and
- selectively generating (GEN) N-P sub-carriers corresponding to the selected subset of N-P frequencies,

the number P being selected from the interval $\left[\!\left[Pmax - \frac{N}{5}, Pmax + \frac{N}{5}\right]\!\right]$, Pmax being the solution of the equation:

$$\Psi(N - P + 1) - \Psi(P + 1) = B \log_2 2,$$

where Ψ is the digamma function, and B the number of bits per symbol modulated on each sub-carrier by means of the predetermined modulation scheme.

2. The data encoding method according to claim 1, wherein the number P is selected from the interval

$$\left[\!\left[ Pmax - \frac{N}{10}, Pmax + \frac{N}{10} \right]\!\right].$$

3. The data encoding method according to claim 1, wherein the number P is selected from the interval

$$\left[\!\left[ Pmax - \frac{N}{20}, Pmax + \frac{N}{20} \right]\!\right].$$

4. The data encoding method according to claim 1, wherein the number P is selected from the interval

$$\left[\!\left[ Pmax - \frac{N}{40}, Pmax + \frac{N}{40} \right]\!\right].$$

5. The data encoding method according to one of claims 1 to 4, wherein the communication channel is non-frequency selective for at least the predetermined set of mutually orthogonal frequencies.

6. The data encoding method according to one of claims 1 to 5, wherein each transmissible symbol is a binary word of N bits, each bit of the binary word being associated with a respective frequency in the predetermined set of frequencies.

7. The data encoding method according to one of claims 1 to 6, wherein each frequency associated with a generated sub-carrier encodes a "1", and each frequency associated with a non-generated sub-carrier encodes a "0".

8. The data encoding method according to one of claims 1 to 7, wherein every transmissible symbol is determined by biunivocal transformation (BIUNIV) operated on an integer to be encoded, the domain of biunivocal transformation being an interval of integers and its codomain a set of transmissible symbols of cardinal $C_N^P$.

9. The data encoding method according to one of claims 1 to 8, wherein the number P is fixed.

10. The data encoding method according to one of claims 1 to 9, wherein the predetermined modulation scheme is BPSK.

11. A data encoder **characterized in that** it is configured to implement the encoding method according to one of claims 1 to 10.

**FIG. 1**

DETP

ENC

GEN

MOD

**FIG. 2**

BIUNIV

FFREQ

**FIG. 3**

1

12

11  13

14

**FIG. 4**

DETF

DEC1

DEC2

**FIG. 5**

2

22

21  23

24

**FIG. 6**

**EP 2 997 690 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009036217 A